# EUROPEAN PATENT APPLICATION

(11) **EP 0 854 419 A2**
(43) Date of publication of application: **22.07.1998**
(21) Application number: 97119949.2
(22) Date of filing: 14.11.1997
(51) Int. Cl.: G06F 9/44

(54) **Access mode objects**

(30) Priority: 16.01.1997 EP 97100555
(71) Applicant: International Business Machines Corporation, Armonk, N.Y. 10504 (US)
(72) Inventor: Bohrer, Kathryn Ann, Austin, Texas 78727 (US)
(74) Representative: Teufel, Fritz, Dipl.-Phys.

(57) **Abstract**

The invention relates to a framework to be used for developing a software system e.g. for a business application. This framework includes a number of object oriented classes which may be processed by a computer system. The number of object oriented classes includes an access mode class which provides an interface to a number of standard access modes. A number of standard access mode objects may be instantiated from the access mode class. Each of the standard access mode objects includes a number of access mode options which may be pre-configured. A lock mode and a compatibility mode are some of the access mode options. The lock modes may include optimistic and pessimistic locks.

## Description

### Field of the Invention:

The invention relates to a framework to be used for developing a software system e.g. for a business application, said framework including a number of object oriented classes which may be processed by a computer system.

### Description of the Prior Art:

More and more, the software industry uses object oriented technology to develop software for e.g. a business application. For that purpose, object oriented classes are created so that instatiated objects of these classes are able to process the business application on a computer system. Thereby, the instantiated objects are the implementations of the classes and include programming code.

Object oriented technology has the advantage that a software developer is able to work on a specific class or object without the knowledge of the other classes or objects.

For that purpose, a class should be designed such that each instantiated object of the class is a mirror of an object in the real world. E.g., a business partner class should be designed such that each of its instantiated business partner objects relates to one real business partner and that all data concerning this real business partner should be accessible by using this business partner object.

For some time, the software industry tries to develop standardized classes which may be used again and again for the solution of a specific problem. These classes are then taken together in a so-called framework and are used to develop software systems, e.g. for business applications. This approach has the advantage that the reusability of the developed programming code is increased.

Such frameworks may have for example two levels. In a first level, a framework provider develops general classes which may be adapted to be used in any application. Then, in a second level, a solution provider adapts this framework to a specific application, e.g. to a business application or a warehouse application and so on. This specific application is also called client application which is finally used by the client, e.g an insurance company or a retail company to run its business.

When such a client application is used by a client, it is often necessary to maintain or modify data in some of the objects used by the client application. This requires that during such modification no other application may access these data. For that purpose, lock modes are known which lock the data to be modified from any other access. However, the disadvantage in particular of the usually used pessimistic lock mode is a decreasing processing power of the computer system.

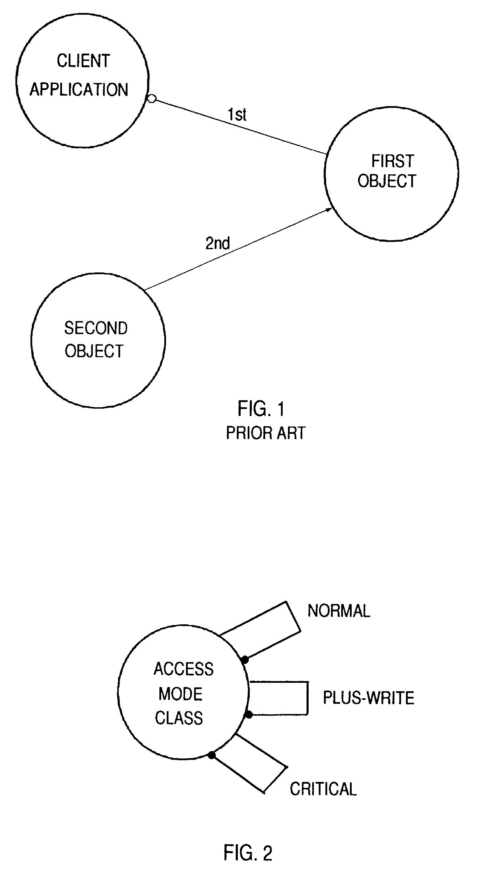

As it is shown in figure 1, it is known that a client application uses a first object which must be concurrency controlled. Either the client application obtains the desired lock for the object or the final object's methods obtain a lock. Because the first object uses a second object to perform some requested actions, the first object must either obtain a lock on the second object or the second object's methods obtain the lock.

The decision for how the second object is locked is not tied to the desired lock choice of the client application. In simple systems, where there are only a few possible lock choices, typically pessimistic read or write locks, this is not a problem because the choice can be based on whether the object's method being invoked needs to update the locked object or not, i.e. needs to write or read only.

However, in more complex systems, a wide variety of lock types and other access options like optimistic locks or location of object execution in distributed systems, may be provided. In this case, a change of the locking and other access options to fit a specific client application may have the consequence that those methods of the first or second object that obtain locks would need to be changed. The result is a very limitid possibility to reuse the first or the second object in connection with other applications.

Furthermore, in particular with the goal of providing reusable objects, the containing object, e.g. the first object, is not able to decide which lock mode the contained object, e.g. the second object, should use. This decision must be propagated from the client application to the containing and the contained objects or the objects have to decide without further knowledge from the client application and with the risk of errors.

### Object of the Invention:

It is an object of the invention to provide an object oriented technology which prevents the above disadvantages.

### Summary of the Invention:

The invention solves this object with an access mode class which provides an interface to a number of standard access modes.

The invention provides a possibility to control the access to various objects in a very general and flexible manner. With the help of the access mode class various access mode objects may be instantiated which may be adapted to the requirements of the specific client application. This has the advantage that the client applications or the used objects do not have to directly deal with the access modes anymore. Instead, the access mode objects provide an indirect interface between the client applications, the used objects and the standard access modes. As most of the client applications and used objects are able to use these standard access modes, the user of the client applications does not have to create new access modes for any new application but may just adapt the standard access modes to his requirements and then use them without further action.

In an embodiement of the invention said access mode class further provides an interface to a customized access mode. This feature is advantageous in situations in which a client application is not adaptable to one of the standard access modes. The user then creates a customized access mode which is perfectly adaptable to the respective requirements of the user's application.

In a further embodiement of the invention each of said instantiated access mode objects includes a number of access mode options. This has the advantage that the most important options for an access mode are already included in the standard access mode objects. The user is therefore able to take over these standard access mode objects in a very effective manner.

In a further embodiement of the invention each of said access mode options is pre-configured with one or more default values. This has the advantage that the user may take over these pre-configurations without any further action. In this situation, the pre-configurations are set such that most of the applications of a user run on the computer system without further problems. However, it is also possible for the user to change the pre-configured values. In this situation, the default values may help the user to select the specific values which fulfil the reuqirement of his specific application.

It is advantageous to use at least a lock mode and a compatibility mode as one of said access mode options. As described, the lock mode is necessary to lock e.g. data of an object during modification. And the compatibility mode specifies how a requested lock mode on an object may be modified to an existing lock mode on that object, or may be modified to an existing lock mode on another specified object.

As an example, it is possible that a client application uses a first object which contains a second object. The client application requests a specific lock mode for the access on the first object, i.e. the containing object. Then, if the first object wants to access the second object, i.e. the contained object, the compatibility mode decides whether the requested lock mode will be used, or whether the lock mode on the containing object will be used. This allows the containing object method to be written requesting an access mode on the contained object that is appropriate, but have that access choice modified according to the access obtained on the containing object by the client application.

According to the invention, said compatibility mode may be selected at least as a no-change compatibility mode or a self compatibility mode or a container compatibility mode.

The no-change compatibility mode specifies that said requested lock mode and other access options has to be used. This compatibility mode therefore leaves no possibility for a change of the lock mode, i.e. the requested lock mode or other access options, e.g. of the containing object has to be used for the access on the contained object.

The self compatibility mode specifies that, if said object is already accessed with a lock mode and other access options, those lock mode and access options have to be used with the lock mode and other access options upgraded to allow operations allowed by the requested lock mode, or, if said object is not yet locked, said requested lock mode and other access options have to be used. This compatibility mode includes the possibility of a change of the requested lock mode or other access options. If e.g. the contained object is already locked, then the lock mode and other access options of the contained object has to be used or upgraded to allow operations allowed by the requested access mode. If the contained object is not yet locked, then the requested lock mode and other access options of the containing object has to be used.

The container compatibility mode specifies that, if said object is already accessed with an access mode, that access mode has to be used and that access mode has to be upgraded to allow operations allowed by the requested access mode, or, if said object is not yet locked, an upgraded access mode of a specified compatible object has to be used. This compatibility mode includes the possibility of a change of the requested access mode. If e.g. the contained object is already accessed, then the access mode of the contained object has to be used and upgraded to allow operations allowed by the requested lock mode of the containing object. If the contained object is not yet accessed, then an upgraded access mode of a specified compatible object has to be used.

If in the case of the container compatibility mode, said specified compatible object is not yet accessed and the contained object is not accessed, said requested access mode has to be used, e.g the requested access mode of the containing object.

In a further embodiement of the invention, at least a normal access mode object and a critical access mode object may be instantiated as standard access mode objects. The normal access mode object may advantageously correspond e.g. to a read access.

As well, another standard access mode object may be instantiated which corresponds to a write access.

Furthermore, it is possible that said normal access mode object provides an optimistic lock mode and that said critical access mode object provides a pessimistic lock mode. This has the advantage that the processing power of the computer system is not lowered when the normal access mode is used but only in critical cases when the critical access mode is used.

### Brief Description of the Drawings:

- Figure 1: shows an object diagram with a client application using business objects with different lock types according to the prior art;
- figure 2: shows a class diagram of an access mode class according to the invention;
- figure 3: shows an object diagram with a client application using business objects and access mode objects according to the invention.

### Detailed Description:

Figure 2 shows a class diagramm of an access mode class from which a normal access mode class and/or a plus-write access mode class and/or a critical access mode classe may be derived. The access mode class may be designed such that no double instantiations of one and the same access mode object occurs. Instead, the respective access mode object is cached.

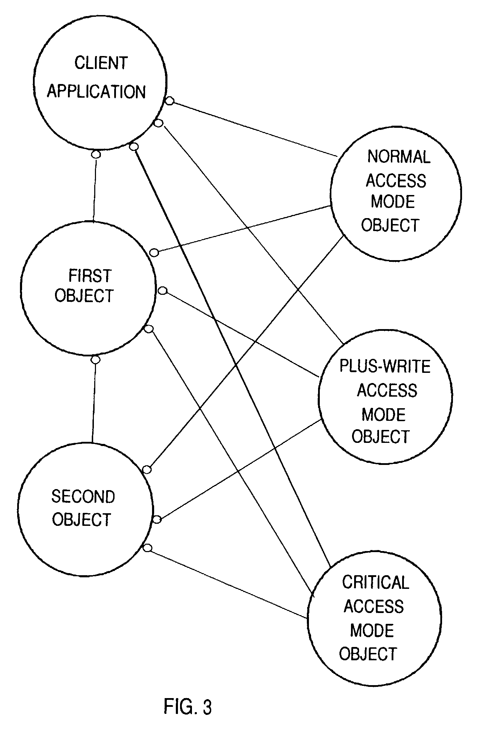

Figure 3 shows an object diagramm according to the invention which is comparable with the prior art object diagram of figure 1.

In figure 3, a client application uses a first object which itself uses a second object. From the access mode class shown in figure 2, a normal access mode object and/or a plus-write access mode object and/or a critical access mode object are instatiated. The normal access mode object provides the possibility of a read access and the plus-write access mode object provides the possibility of a write access. These three access mode objects may be used by the client application, by the first object and by the second object.

The three access mode objects shown in figure 3 are standard access mode objects. They represent three standard access modes which fulfil the requirements of most of the client applications and their used objects. The specific requirements of each client application are met by tailoring each of these standard access mode objects in each client application.

Furthermore, a customized access mode object may be instatiated from the access mode class of figure 1. This customized access mode object may be adapted to specific requirements of a client application or its used objects and may then be used by the client application and its used objects.

The access mode class with its instantiated standard access mode objects and/or its customized access mode object provides an interface to a number of standard access modes and/or to a customized access mode.

Each of the standard access mode objects as well as the customized access mode object includes a number of access mode options. These are for example a lock mode and/or an access location mode and/or a compatibility mode and/or a timeout mode and/or a collection element access mode.

In particular in connection with the standard access mode objects, all of these access mode options are pre-configured with one or more default values. In connection with the customized access mode object it is possible that the access mode options are not pre-configured. All access mode options of the standard and the customized access mode objects may be modified by the user.

The lock mode provides a number of possibilities, for example a stable optimistic lock mode and/or a pessimistic read lock mode and/or a pessimistic write lock mode and/or a no-lock lock mode.

When a stable optimisitc lock mode is specified, each requester is granted access to the requested object. A copy of the object is given to the requester which may be modified by the requester. At the end of the request, the computer system checks to make sure that the object has not been changed since it was copied, then a pessimistic write lock mode is obtained on the object and the changes of the requester are made in the object. If a modified object was also changed by another requester or the write lock mode is not obtained, then the computer system will enter a recovery procedure.

A repeatable read optimistic lock mode may also be supported which checks all accessed objects even those not changed by the requester at the end of the request, to see whether those objects were changed by the user.

In contrast thereto, a pessimistic lock only allows one requester at a time to use and modify an object. In particular, the read lock mode and the write lock mode are pessimistic lock modes.

The access location mode says where the accessed object should run. Such an access location mode is important in distributed systems in order to decrease the transmission of data between the several computer systems.

The access location mode may be local or home. Local means that the requested object should run on the requester's computer system, i.e. on the same computer system as the requester. Home means that the requested object should run as a server process, i.e. on the computer system of the requested object. In the second possibility, the data of the requested object do not have to be transmitted to the requester's computer system, but all method requests must be transmitted to the server from the client.

The compatibility mode specifies whether and how the lock mode and/or the access location mode may be modified. In particular, the compatibility mode specifies how a requested lock mode may be modified to be compatible with an existing lock mode on an object. Furthermore, the compatibility modes influences the access location mode in a similar manner as the lock mode.

With regard to the object diagram of figure 3, it is possible that the client application requests a specific lock mode for the access on the first object. Then, if the first object has to access the second object, it has to be decided which lock mode has to be used for this access. This decision might be different depending on whether the second object is already locked or is not yet locked. The compatibility mode provides the rules how to decide the lock mode for the access on the second object.

The compatibility mode may have the possibilities of a no-change compatibility mode and/or a self compatibility mode and/or a container compatibility mode.

The no-change compatibility mode specifies that said requested lock mode and other access options has to be used. This compatibility mode therefore leaves no possibility for a change of the lock mode, i.e. the requested lock mode or other access options, e.g. of the containing object has to be used for the access on the contained object.

The self compatibility mode specifies that, if said object is already accessed with a lock mode and other access options, those lock mode and access options have to be used with the lock mode and other access options upgraded to allow operations allowed by the requested lock mode, or, if said object is not yet locked, said requested lock mode and other access options have to be used. This compatibility mode includes the possibility of a change of the requested lock mode or other access options. If e.g. the contained object is already locked, then the lock mode and other access options of the contained object has to be used or upgraded to allow operations allowed by the requested access mode. If the contained object is not yet locked, then the requested lock mode and other access options of the containing object has to be used.

The container compatibility mode specifies that, if said object is already accessed with an access mode, that access mode has to be used and that access mode has to be upgraded to allow operations allowed by the requested access mode, or, if said object is not yet locked, an upgraded access mode of a specified compatible object has to be used. This compatibility mode includes the possibility of a change of the requested access mode. If e.g. the contained object is already accessed, then the access mode of the contained object has to be used and upgraded to allow operations allowed by the requested lock mode of the containing object. If the contained object is not yet accessed, then an upgraded access mode of a specified compatible object has to be used.

If in the case of the container compatibility mode, said specified compatible object is not yet accessed and the contained object is not accessed, said requested access mode has to be used, e.g the requested access mode of the containing object.

The timout mode says how long an access should wait for a lock mode to become available. The value of the timout mode may be any non-zero positive value. In addition, there may exist a no-wait timeout mode and/or a wait-forever timeout mode.

The collection element access mode relates to the access of collections, in particular to the access of the elements contained in the collections. When accessing a collection, two lock modes and two of many of the other options are specified. One lock mode and associated other options apply to the colection and the other lock mode and associated other options apply to the elements of the collection.

At least, the normal access mode object and the critical access mode object should be instantiated by a user. The normal access mode object and the plus-write access mode object may be pre-configured to include an optimistic lock mode and the critical access mode object may be pre-configured to provide a pessimistic write lock mode. This has the consequence that the computer system in most cases tries to use the optimisitc lock mode and only under specific conditions the pessimistic lock mode of the critical access mode object is used.

## Claims

1. Framework to be used for developing a software system e.g. for a business application, said framework including a number of object oriented classes which may be processed by a computer system, wherein said number of object oriented classes includes an access mode class which provides an interface to a number of standard access modes.

2. Framework according to claim 1 wherein said access mode class further provides an interface to a customized access mode.

3. Framework according to claim 1 or claim 2 wherein each of said instantiated access mode objects includes a number of access mode options.

4. Framework according to claim 3 wherein each of said access mode options is pre-configured with one or more default values.

5. Framework according to claim 3 or claim 4 wherein said access mode options include at least a lock mode and a compatibility mode.

6. Framework according to claim 5 wherein said compatibility mode specifies how a requested lock mode may be modified to an existing lock mode on an object.

7. Framework according to claim 6 wherein said compatibility mode may be selected at least as a no-change compatibility mode or a self compatibility mode or a container compatibility mode.

8. Framework according to claim 7 wherein said no-change compatibility mode specifies that said requested lock mode has to be used.

9. Framework according to claim 7 wherein said self compatibility mode specifies that, if said object is already locked with a lock mode, that lock mode has to be used and upgraded as necessary, or, if said object is not yet locked, said requested lock mode has to be used.

10. Framework according to claim 7 wherein said container compatibility mode specifies that, if said object is already locked with a lock mode, that lock mode has to be used and upgraded as necessary, or, if said object is not yet locked, an upgraded lock mode of a specified compatible object has to be used.

11. Framework according to claim 10 wherein, if said specified compatible object is not yet locked, said requested lock mode has to be used.

12. Framework according to claim 1 wherein at least a normal access mode object and a critical access mode object may be instantiated as standard access mode objects.

13. Framework according to claim 12 wherein said normal access mode object provides an optimistic lock mode and wherein said critical access mode object provides a pessimistic lock mode.

14. Framework according to claim 1 wherein at least a normal access mode object and a plus-write access mode object may be instantiated as standard access mode objects.

15. Framework according to claim 1 wherein an optimistic lock mode and/or a repeatable optimistic lock mode and/or a stable optimistic mode and/or a pessimistic lock mode is provided.
